# EUROPEAN PATENT SPECIFICATION

(11) **EP 3 355 530 B1**
(45) Date of publication and mention of the grant of the patent: **28.07.2021**
(21) Application number: 16895845.2
(22) Date of filing: 29.03.2016
(51) Int. Cl.: H04L 12/64, H04L 12/707, H04L 12/703, H04L 12/24, H04L 12/715, H04L 12/721

(54) **METHOD AND APPARATUS FOR PROCESSING SERVICE FAILURE**
VERFAHREN UND VORRICHTUNG ZUR VERARBEITUNG VON DIENSTAUSFÄLLEN
PROCÉDÉ ET APPAREIL POUR TRAITER UNE DÉFAILLANCE DE SERVICE

(43) Date of publication of application: 01.08.2018
(73) Proprietor: Huawei Technologies Co., Ltd., Longgang District Shenzhen, Guangdong 518129 (CN)
(72) Inventor: ZHENG, Haomian, Shenzhen Guangdong 518129 (CN); LIU, Xinchao, Shenzhen Guangdong 518129 (CN)
(74) Representative: Epping - Hermann - Fischer
(86) International application number: PCT/CN2016/077698
(87) International publication number: WO 2017/166064

(56) References cited:
- CN-A- 102 136 940
- CN-A- 103 973 491
- CN-A- 104 243 015
- JP-A- 2012 073 148
- CHIU A ET AL: "Architectures and Protocols for Capacity Efficient, Highly Dynamic and Highly Resilient Core Networks [Invited]", JOURNAL OF OPTICAL COMMUNICATIONS AND NETWORKING, INSTITUTE OF ELECTRICAL AND ELECTRONICS ENGINEERS, US, vol. 4, no. 1, 1 January 2012 (2012-01-01) , pages 1-14, XP011417717, ISSN: 1943-0620, DOI: 10.1364/JOCN.4.000001
- D. COLLE, B. PUYPE, A. GROEBBENS, L. DEPRÉ, D. STAESSENS, I. LIEVENS, M. PICKAVET, P. DEMEESTER: "Recovery strategies in multilayer networks", SPIE, PO BOX 10 BELLINGHAM WA 98227-0010 USA, 21 March 2015 (2015-03-21), XP040212928,

## Description

### TECHNICAL FIELD

The present invention relates to the field of communications technologies, and in particular, to a service troubleshooting method, apparatus, and device.

### BACKGROUND

Currently, a PCE (Path Computation Element, path computation element) in a service transmission network is used to implement computation in a service transmission path. For example, after a request is received from a PCC (Path Computation Client, path computation client) or alarm information is received from a node in a current service transmission path, path computation is performed by using a routing algorithm and available resources in the current service transmission network, and path information is returned to determine a service transmission path. A multilayer service transmission network is one of service transmission networks, for example, including an IP (Internet Protocol, Internet Protocol) layer network and an optical layer network. In a transmission network including an IP layer network and an optical layer network, when routing resources between two IP nodes such as an IP node A and an IP node B are insufficient or being optimized, a cross-layer service may be usually established, that is, a service is transmitted from the IP node A to the IP node B by using an optical link. A protection path usually needs to be deployed in the service transmission network. When detecting a working path for transmitting a service is faulty or degraded, a node automatically switches the service from the working path to the protection path. When detecting that the faulty or degraded working path becomes normal, the node automatically switches the service from the protection path to the working path. When the service is transmitted in an optical layer link, an IP layer node (that is, the IP node A) detects a link fault at the moment at which the service is switched between the working path and the protection path. Therefore, the IP layer node may determine that the optical layer network encounters a link fault, and further request an IP layer PCE for service optimization. The IP layer PCE performs path computation, determines an optimal path, and switches the service to the optimal path for transmission. However, in the optical layer link, when a physical parameter of an optical layer is unstable, the service is frequently switched between the working path and the protection path at the optical layer. Therefore, the IP layer node determines that the optical layer network encounters a link fault, and further requests the PCE for optimization. However, actually, the link in the optical layer network is not faulty, and path switching is caused by physical performance instability. An optimization solution of the PCE is that a service is frequently switched between currently available paths. Consequently, the currently available paths are occupied by the service, affecting transmission of another service and further affecting stability of a transmission network.

Chiu et al: "Architectures and Protocols for Capacity Efficient, Highly Dynamic and Highly Resilient Core Networks", Vol. 4, No. 1, 2012, J. Opt. Commun. Netw., relates to the Core Optical Networks (CORONET) program, which addresses the development of architectures, protocols, and network control and management to support the future advanced requirements of both commercial and government networks, with a focus on highly dynamic and highly resilient multi-terabit core networks. The rapid restoration requirements of CORONET favor the use of path-based (i.e., end-to-end) restoration. In path-based restoration, the connection end-points are notified that a fault has occurred (e.g., by a loss of signal (LOS) or an alarm indication signal (AIS) in the transport system overhead), and the end-points signal the setup of the restoration path.

Colle et al: "Recovery strategies in multilayer networks", Proc. of SPIE, Vol 6022, 2005, discloses that, due to a continuous stream of technological advances, enormous amounts of traffic are aggregated onto a single fiber. The main drive for this is the cost savings that are realized due to the economy of scale. However, a major drawback is the impact of a single failure (e.g., cable cut), which can become very and even unacceptably large. The paper aims at discussing the different techniques that can be applied to deal with such circumstances and discloses that dynamic multilayer survivability strategies differ from static strategies in the sense that they actually use logical topology modification for recovery purposes. This requires the possibility to set up and tear down lower layer network connections that implement logical links in the higher network layer in real-time. Optical networks will therefore be enhanced with a control plane, which gives the client networks the possibility to initiate the set-up and tear-down of lightpaths in the optical layer. This is used to reconfigure the logical IP network in case of a network failure. This approach has the advantage that in the logical network, spare resources do not need to be established in advance.

### SUMMARY

The present invention is defined in the appended claims. The present invention provides a service troubleshooting method and apparatus, so as to resolve a problem that due to instability of a physical parameter of an optical layer network, a service is frequently switched between a working path and a protection path at an optical layer, and an IP layer node generates a false alarm, and consequently, the service is frequently switched between currently available paths, affecting transmission of another service and stability of a transmission network.

To achieve the foregoing objective, the present invention use the following technical solutions:
According to a first aspect, the present invention provides a service troubleshooting method, where the method is applied to a service transmission network, the service transmission network includes an IP layer network and an optical layer network, the IP layer network includes an IP layer PCE and a first IP node, and the method includes:
receiving, by the IP layer PCE, alarm details, where the alarm details are used to indicate a type of a fault that occurs in a service transmission path in an optical layer network and are received after the first IP node detects that the service transmission path in the optical layer network is faulty, the service transmission path includes a path in which a service is transmitted in the IP layer network and the optical layer network, and the first IP node is an IP node that is in the service transmission path and that is connected to an optical node in the optical layer network;
determining, by the IP layer PCE, a fault type of the service transmission path in the optical layer network according to the alarm details;
performing, by the IP layer PCE, service optimization when the IP layer PCE determines that the path fault type is a real fault; and
skipping performing, by the IP layer PCE, service optimization when the IP layer PCE determines that the path fault type is a pseudo fault.

With reference to the first aspect, in a first implementation of the first aspect, before the receiving, by the IP layer PCE, alarm details, the method further includes:
receiving, by the IP layer PCE, an alarm indication sent by the first IP node, where the alarm indication is used to indicate that the service transmission path in the optical layer network is faulty; and
sending, by the IP layer PCE, a query message, where the query message is used to instruct to query the alarm details.

In this implementation, the IP layer PCE directly sends query information after receiving alarm information sent by the first IP node, so that the IP layer PCE receives the alarm details and determines the path fault type.

With reference to the first aspect or the first implementation of the first aspect, in a second implementation of the first aspect, the alarm details include optical layer switching frequency of the optical layer network, an optical layer switching type of the optical layer network, and an optical layer bit error rate of the optical layer network.

In this implementation, the optical layer switching frequency of the optical layer network, the optical layer switching type of the optical layer network, and the optical layer bit error rate of the optical layer network are related parameters that affect service transmission. In this way, correctness of determining the path fault type by the IP layer PCE according to the foregoing parameters can be ensured.

With reference to the first aspect, in a third implementation of the first aspect, the service transmission network further includes an application layer server, and after the determining, by the IP layer PCE, a fault type of the service transmission path in the optical layer network according to the alarm details, the method further includes:
reporting, by the IP layer PCE, a determining result to the application layer server, so that the application layer server determines whether the determining result is correct; and
receiving and recording, by the IP layer PCE, feedback information of the application layer server, where the feedback information is used to indicate whether the determining result is correct; and
the determining, by the IP layer PCE, a fault type of the service transmission path in the optical layer network according to the alarm details includes:
   determining, by the IP layer PCE, the fault type of the service transmission path in the optical layer network according to the feedback information and the alarm details.

In this implementation, the application layer server determines whether the determining result by the IP layer PCE is correct and returns the feedback information to the IP layer PCE. The IP layer PCE determines the path fault type according to the feedback information of the application layer server and the alarm details, so as to further improve correctness of determining the path fault type by the IP layer PCE.

According to a second aspect, the present invention provides a service troubleshooting apparatus, where the apparatus is applied to a service transmission network, the service transmission network includes an Internet Protocol IP layer network and an optical layer network, the IP layer network includes an IP layer path computation element PCE and a first IP node, the apparatus is the IP layer PCE, and the apparatus includes:
a receiving unit, configured to receive alarm details, where the alarm details are used to indicate a type of a fault that occurs in a service transmission path in an optical layer network and are received after the first IP node detects that the service transmission path in the optical layer network is faulty, the service transmission path includes a path in which a service is transmitted in the IP layer network and the optical layer network, and the first IP node is an IP node that is in the service transmission path and that is connected to an optical node in the optical layer network;
a determining unit, configured to determine a fault type of the service transmission path in the optical layer network according to the alarm details; and
a processing unit, configured to perform service optimization when the IP layer PCE determines that the path fault type is a real fault, where
the processing unit is further configured to skip performing service optimization when the IP layer PCE determines that the path fault type is a pseudo fault.

With reference to the second aspect, in a first implementation of the second aspect, the receiving unit is further configured to receive an alarm indication sent by the first IP node, where the alarm indication is used to indicate that the service transmission path in the optical layer network is faulty; and
the apparatus further includes:
a sending unit, configured to send a query message, where the query message is used to instruct to query the alarm details.

In this implementation, the IP layer PCE directly sends query information after receiving alarm information sent by the first IP node, so that the IP layer PCE receives the alarm details and determines the path fault type.

With reference to the second aspect or the first implementation of the second aspect, in a second implementation of the second aspect, the alarm details include optical layer switching frequency of the optical layer network, an optical layer switching type of the optical layer network, and an optical layer bit error rate of the optical layer network.

In this implementation, the optical layer switching frequency of the optical layer network, the optical layer switching type of the optical layer network, and the optical layer bit error rate of the optical layer network are related parameters that affect service transmission. In this way, correctness of determining the path fault type by the IP layer PCE according to the foregoing parameters can be ensured.

With reference to the second aspect, in a third implementation of the second aspect, the service transmission network further includes an application layer server, and the apparatus further includes:
a reporting unit, configured to report a determining result to the application layer server, so that the application layer server determines whether the determining result is correct;
the receiving unit is further configured to receive feedback information of the application layer server, where the feedback information is used to indicate whether the determining result is correct;
the processing unit is further configured to record the feedback information of the application layer server; and
the determining unit is further configured to determine the fault type of the service transmission path in the optical layer network according to the feedback information and the alarm details.

In this implementation, the application layer server determines whether the determining result by the IP layer PCE is correct and returns the feedback information to the IP layer PCE. The IP layer PCE determines the path fault type according to the feedback information of the application layer server and the alarm details, so as to further improve correctness of determining the path fault type by the IP layer PCE.

According to the service troubleshooting method and apparatus provided in the embodiments of the present invention, in the embodiments of the present invention, the IP layer PCE receives the alarm details after the first IP node detects that the service transmission path in the optical layer network is faulty. Then the IP layer PCE determines, according to the alarm details, whether the path fault type of the service transmission path in the optical layer network is a real fault or a pseudo fault. The IP layer PCE executes a service optimization procedure when the fault type is a real fault. The IP layer PCE does not execute the service optimization procedure when the fault type is a pseudo fault. In this way, the IP layer PCE receives the alarm details after the first IP node detects that a service path in the optical layer network is faulty, and may determine, according to the alarm details, whether the path in the optical layer network is actually faulty. The IP layer PCE executes the service optimization procedure only when determining that the path in the optical layer network is actually faulty. Therefore, the IP layer PCE does not need to perform service optimization when a link in the optical layer network is not faulty, and particularly, a service is not frequently switched between currently available paths when a physical parameter of an optical layer is unstable. This resolves a problem that the currently available paths are occupied by the service, affecting transmission of another service and further affecting stability of a transmission network.

### BRIEF DESCRIPTION OF DRAWINGS

To describe the technical solutions in the embodiments of the present invention more clearly, the following briefly describes the accompanying drawings required for describing the embodiments or the prior art.
FIG. 1, FIG. 2, and FIG. 3 are schematic architecture diagrams according to an embodiment of the present invention;
FIG. 4 is a flowchart of a method according to an embodiment of the present invention;
FIG. 5 is a flowchart of a method according to another embodiment of the present invention;
FIG. 6 is a flowchart of a method according to another embodiment of the present invention;
FIG. 7 and FIG. 8 are schematic structural diagrams of an apparatus according to another embodiment of the present invention; and
FIG. 9 is a schematic structural diagram of a device according to another embodiment of the present invention.

### DESCRIPTION OF EMBODIMENTS

The following clearly describes the technical solutions in the embodiments of the present invention with reference to the accompanying drawings in the embodiments of the present invention.

To make the advantages of the technical solutions of the present invention clearer, the following describes the present invention in detail with reference to the accompanying drawings and embodiments.

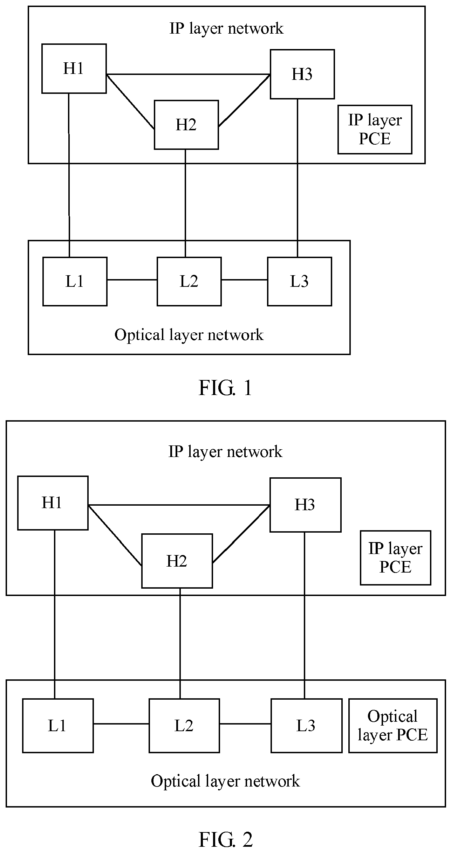

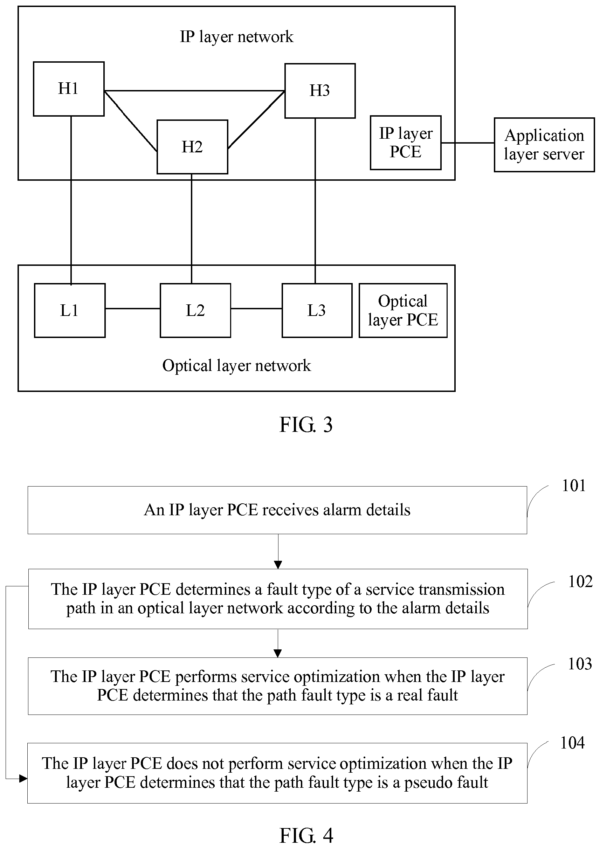

Embodiments of the present invention are applied to a multilayer service transmission network, for example, a transmission network including an IP layer network and an optical layer network. In the transmission network including the IP layer network and the optical network, the IP layer network includes an IP node and an IP layer PCE, the optical layer network includes an optical node, and the optical layer network may be a distributed network or a centralized network. Specific scenarios may be shown in FIG. 1, FIG. 2, and FIG. 3. As shown in FIG. 1, an IP node in the IP layer network includes three IP nodes H1, H2, and H3, the optical layer network is a distributed network, the optical layer network includes three optical nodes L1, L2, and L3, a cross-layer service transmission path may be H1->H2->L2->L3->H3, and a protection path is configured for a segment L2-L3 in the optical layer network. As shown in FIG. 2, an IP node in the IP layer network includes three IP nodes H1, H2, and H3, the optical layer network is a centralized network, the optical layer network includes three optical nodes L1, L2, and L3 and an optical layer PCE, a cross-layer service transmission path is H1->H2->L2->L3->H3, and a protection path is configured for a segment L2-L3 in the optical layer network. The transmission network including the IP layer network and the optical layer network may further include an application server that runs independently of the IP layer network and the optical layer network and that may exist in an application layer controller or a network manager. In this case, the optical layer network may be both a distributed network and a centralized network. The present invention uses the centralized network as an example for description. As shown in FIG. 3, an IP node in the IP layer network includes three IP nodes H1, H2, and H3, the optical layer network includes three optical nodes L1, L2, and L3 and an optical layer PCE, a cross-layer service transmission path is Hl->H2->L2->L3->H3, and a protection path is configured for a segment L2-L3 in the optical layer network.

An embodiment of the present invention provides a service troubleshooting method. As shown in FIG. 4, the method includes the following steps.

101. An IP layer PCE receives alarm details.

The alarm details are used to indicate a type of a fault that occurs in a service transmission path in an optical layer network. The alarm details are received after a first IP node detects that the service transmission path in the optical layer network is faulty. The service transmission path includes a path in which a service is transmitted in an IP layer network and the optical layer network. The first IP node is an IP node that is in the service transmission path and that is connected to an optical node in the optical layer network.

Specifically, as shown in FIG. 1, FIG. 2, and FIG. 3, a service transmission path is H1->H2->L2->L3->H3, a path that is in the service transmission path and that is in the optical layer network is L2->L3, and H2 is the first IP node. That is, when H2 detects that the path L2->L3 is faulty, the IP layer PCE receives the alarm details.

102. The IP layer PCE determines a fault type of a service transmission path in an optical layer network according to the alarm details.

The path fault type includes a real fault and a pseudo fault.

In this embodiment of the present invention, the alarm details are used to indicate the type of the fault that occurs in the service transmission path in the optical layer network, and may include an optical layer network attribute parameter, for example, one or more parameters of optical layer switching frequency, an optical switching type, or an optical layer bit error rate. Specifically, a method for determining a fault type by an IP layer PCE according to an optical layer network attribute parameter may include performing determining by using a threshold. For the optical layer switching frequency, for example, when the optical layer switching frequency is greater than a threshold (for example, 10 times per minute), the fault type is determined as a pseudo fault, and when the optical layer switching frequency is less than the threshold, the fault type is determined as a real fault. For the optical layer switching type, for example, when the optical layer switching type is linear switching, the fault type is a real fault, and when the switching type is optical layer switching, the fault type is a pseudo fault. For the optical layer bit error rate, for example, when the optical layer bit error rate is greater than a threshold (for example, 10^(-5)), the fault type is determined as a real fault, and when the optical layer bit error rate is less than the threshold, the fault type is determined as a pseudo fault. The optical layer network attribute parameter may be optical power, impairment, or the like. The alarm details may alternatively be a path switching catalog of a service that is switched between a service transmission path and a protection path corresponding to the service transmission path within a period of time, or a combination of the foregoing information. When the alarm details include a plurality of parameters, the fault type needs to be comprehensively determined, for example, by performing voting or rating.

It should be noted that, the real fault in the path fault type indicates that the path that is in the service transmission path and that is in the optical layer network is actually faulty, and a service cannot continue to be transmitted. The pseudo fault in the path fault type indicates that the path that is in the service transmission path and that is in the optical layer network is not faulty but the first IP node detects that the path that is in the service transmission path and that is in the optical layer network is faulty. For example, when the service is transmitted in a path in the optical layer network and intra-layer switching is performed on the service between a normal path and a protection path, service interruption occurs when each time of path switching encounters transient interruption. In this case, an IP node, that is, H2, detects the service interruption and therefore determines that the path is faulty. However, actually, the path is not faulty. Therefore, the fault type is a pseudo fault.

103. The IP layer PCE performs service optimization when the IP layer PCE determines that the path fault type is a real fault.

104. The IP layer PCE does not perform service optimization when the IP layer PCE determines that the path fault type is a pseudo fault.

In this embodiment of the present invention, the IP layer PCE receives the alarm details after the first IP node detects that the service transmission path in the optical layer network is faulty. Then the IP layer PCE determines, according to the alarm details, whether the path fault type of the service transmission path in the optical layer network is a real fault or a pseudo fault. The IP layer PCE executes a service optimization procedure when the fault type is a real fault. The IP layer PCE does not execute the service optimization procedure when the fault type is a pseudo fault. In this way, the IP layer PCE receives the alarm details after the first IP node detects that a service path in the optical layer network is faulty, and may determine, according to the alarm details, whether the path in the optical layer network is actually faulty. The IP layer PCE executes the service optimization procedure only when determining that the path in the optical layer network is actually faulty. Therefore, the IP layer PCE does not need to perform service optimization when a link in the optical layer network is not faulty, and particularly, a service is not frequently switched between currently available paths when a physical parameter of an optical layer is unstable. This resolves a problem that the currently available paths are occupied by the service, affecting transmission of another service and further affecting stability of a transmission network.

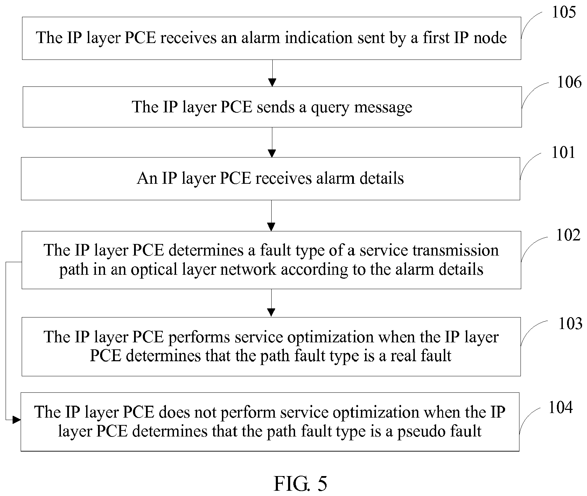

In an implementation of this embodiment of the present invention, on the basis of the embodiment shown in FIG. 4, as shown in FIG. 5, step 105 and step 106 may be performed before step 101.

105. The IP layer PCE receives an alarm indication sent by a first IP node.

The alarm indication is used to indicate that the service transmission path in the optical layer network is faulty. The first IP node sends alarm information to the IP layer PCE after detecting that the service transmission path in the optical layer network is faulty.

Specifically, as shown in FIG. 1, FIG. 2, and FIG. 3, H2 sends the alarm information to the IP layer PCE after detecting that the path L2->L3 is faulty.

106. The IP layer PCE sends a query message.

The query message is used to instruct to query the alarm details. When the optical layer network is a distributed network, the IP layer PCE may send the query message to the optical node. As shown in FIG. 1, the IP layer PCE sends the query message to L2 or L3. When the optical layer network is a centralized network, the IP layer PCE sends the query message to the optical layer PCE. As shown in FIG. 2 and FIG. 3, the IP layer PCE sends the query message to the optical layer PCE.

In this implementation, the IP layer PCE sends query information after receiving the alarm indication sent by the first IP node, so that a first optical node or the optical layer PCE feeds back the alarm details to the IP layer PCE, so that the IP layer PCE determines the path fault type.

It should be noted that in the service transmission network, a specific manner in which the IP layer PCE receives the alarm details is not limited to merely step 105 and step 106. For example, the alarm details and the alarm information in step 105 may be simultaneously sent to the IP layer PCE, or the IP layer PCE does not need to perform step 106 after performing step 105 but directly receives the alarm details sent by the optical layer network.

In another implementation of this embodiment of the present invention, the service transmission network further includes an application layer server. The embodiment shown in FIG. 4 is a procedure executed after the IP layer PCE receives the alarm details for the first time, and after step 102 is performed, step 107 and step 108 may be further performed.

107. The IP layer PCE reports a determining result to an application layer server, so that the application layer server determines whether the determining result is correct.

The IP layer PCE reports the determining result to the application layer server, so that the application layer server determines whether the determining result is correct. The application layer server may determine whether the result that is of the determining and that is reported by the IP layer PCE is correct and sends a feedback message to the IP layer PCE. A manner in which the application layer server determines whether the result that is of the determining and that is reported by the IP layer PCE is correct is not limited. For example, whether the result that is of the determining and that is reported by the IP layer PCE is correct is determined by checking resources.

108. The IP layer PCE receives and records feedback information of the application layer server, where the feedback information is used to indicate whether the determining result is correct.

In this embodiment of the present invention, the IP layer PCE interacts with the application layer server, records the feedback message sent by the application layer server, and performs auto-learning on the feedback message, to instruct the IP layer PCE to determine a path fault type for the next time. That is, after alarm details are subsequently received, the IP layer PCE determines, according to the feedback information and the alarm details, the path fault type of the service transmission path in the optical layer network.

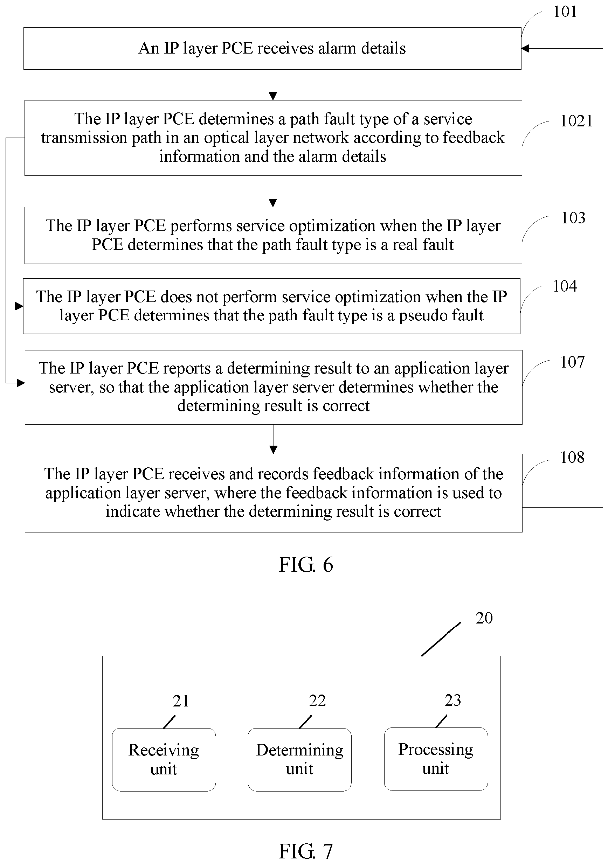

Specifically, the IP layer PCE generates a classifier according to first k pieces of feedback information of the application layer server, based on a statistical law, and by running an algorithm. The classifier is configured to determine a (K+1)^{th} alarm. Alternatively, the IP layer PCE performs auto-learning by using an algorithm such as KNN (k-nearest neighbor, k-nearest neighbor) or SVM (support vector machine, Support Vector Machine) according to the feedback information, and then instructs the IP layer PCE to determine a path fault type for the next time. After step 107 and step 108 are completed, because the feedback message may be used to instruct the IP layer PCE to determine a path fault type for the next time, in a subsequent process, step 102 may be specifically step 1021 after the IP layer PCE receives the alarm details, and a specific processing procedure is shown in FIG. 6.

1021. The IP layer PCE determines the path fault type of the service transmission path in the optical layer network according to the feedback information and the alarm details.

In this implementation, the application layer server determines whether the determining result by the IP layer PCE is correct and returns the feedback information to the IP layer PCE. The IP layer PCE determines the path fault type according to the feedback information of the application layer server and the alarm details, so as to further improve correctness of determining the path fault type by the IP layer PCE.

Another embodiment of the present invention provides a service troubleshooting apparatus 20. As shown in FIG. 7, the apparatus 20 is applied to a service transmission network. The service transmission network includes an IP layer network and an optical layer network. The IP layer network includes an IP layer PCE and an IP node, the apparatus 20 is the IP layer PCE, and the apparatus 20 includes:
a receiving unit 21, configured to receive alarm details, where the alarm details are received after the first IP node detects that a service transmission path in the optical layer network is faulty, the service transmission path includes a path in which a service is transmitted in the IP layer network and the optical layer network, and the first IP node is an IP node that is in the service transmission path and that is connected to an optical node in the optical layer network;
a determining unit 22, configured to determine a fault type of the service transmission path in the optical layer network according to the alarm details; and
a processing unit 23, configured to perform service optimization when the IP layer PCE determines that the path fault type is a real fault.

The processing unit 23 is further configured to skip performing service optimization when the IP layer PCE determines that the path fault type is a pseudo fault.

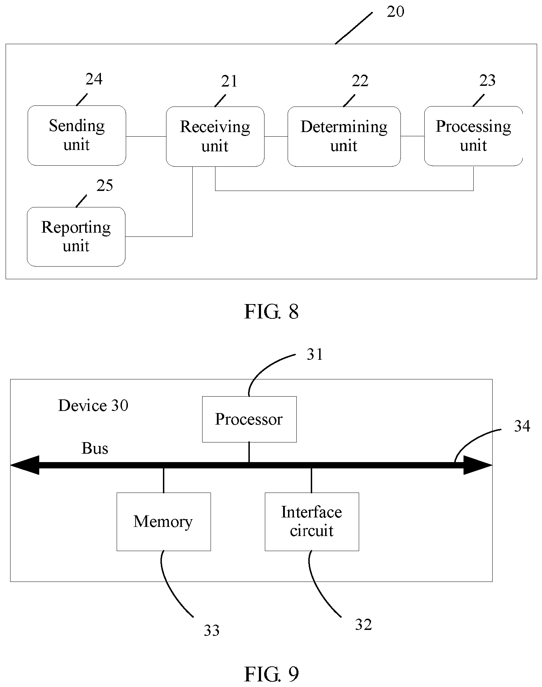

In an implementation of this embodiment of the present invention, as shown in FIG. 8, the receiving unit 21 is further configured to receive an alarm indication sent by the first IP node. The alarm indication is used to indicate that the service transmission path in the optical layer network is faulty. The apparatus 20 may further include:
a sending unit 24, configured to send a query message, where the query message is used to instruct to query the alarm details.

In another implementation of this embodiment of the present invention, the alarm details include optical layer switching frequency of the optical layer network, an optical layer switching type of the optical layer network, and an optical layer bit error rate of the optical layer network.

In another implementation of this embodiment of the present invention, as shown in FIG. 8, the service transmission network further includes an application layer server, and the apparatus 20 may further include:
a reporting unit 25, configured to report a determining result to the application layer server, so that the application layer server determines whether the determining result is correct. The receiving unit 21 is further configured to receive feedback information of the application layer server, where the feedback information is used to indicate whether the determining result is correct.

The processing unit 23 is further configured to record the feedback information of the application layer server.

The determining unit 22 is further configured to determine the fault type of the service transmission path in the optical layer network according to the feedback information and the alarm details.

In this embodiment of the present invention, the apparatus 20 receives the alarm details after the first IP node detects that the service transmission path in the optical layer network is faulty. Then the apparatus 20 determines, according to the alarm details, whether the path fault type of the service transmission path in the optical layer network is a real fault or a pseudo fault. The apparatus 20 executes a service optimization procedure when the fault type is a real fault. The apparatus 20 does not execute the service optimization procedure when the fault type is a pseudo fault. In this way, the apparatus 20 receives the alarm details after the first IP node detects that a service path in the optical layer network is faulty, and may determine, according to the alarm details, whether the path in the optical layer network is actually faulty. The apparatus 20 executes the service optimization procedure only when determining that the path in the optical layer network is actually faulty. Therefore, the apparatus 20 does not need to perform service optimization when a link in the optical layer network is not faulty, and particularly, a service is not frequently switched between currently available paths when a physical parameter of an optical layer is unstable. This resolves a problem that the currently available paths are occupied by the service, affecting transmission of another service and further affecting stability of a transmission network.

Another embodiment of the present invention provides a service troubleshooting device 30. As shown in FIG. 9, the device 30 includes a processor 31 and an interface circuit 32. FIG. 9 further shows a memory 33 and a bus 34, and the processor 31, the interface circuit 32, and the memory 33 are connected by using the bus 34 to implement mutual communication.

It should be noted that the processor 31 herein may be one processing element, or may be a general term for a plurality of processing elements. For example, the processing element may be a central processing unit (Central Processing Unit, CPU), or an application-specific integrated circuit (Application-Specific Integrated Circuit, ASIC), or one or more integrated circuits configured to implement this embodiment of the present invention, for example, one or more microprocessors (digital signal processor, DSP) or one or more field programmable gate arrays (Field Programmable Gate Array, FPGA).

The memory 33 may be one storage apparatus or may be a general term for a plurality of storage elements, and is configured to store executable program code or a parameter, data, and the like that are required for running an access network management device. In addition, the memory 33 may include a random access memory (RAM), or may include a non-volatile memory (non-volatile memory), such as a magnetic disk memory or a flash (Flash).

The bus 34 may be an industry standard architecture (Industry Standard Architecture, ISA) bus, a Peripheral Component Interconnect (Peripheral Component Interconnect, PCI) bus, an extended industry standard architecture (Extended Industry Standard Architecture, EISA) bus, or the like. The bus 34 may be categorized into an address bus, a data bus, a control bus, and the like. For ease of representation, only one bold line is used in FIG. 9 to represent the bus 34, but it does not indicate that there is only one bus or one type of bus.

The device 30 may further include an input/output apparatus. The input/output apparatus is connected to the bus 34, so as to connect to another component such as the processor 31 by using the bus 34.

The processor 31 invokes the program code in the memory 33, so as to perform operations performed by the device 30 in the foregoing method embodiment.

Specifically, the processor 31 is configured to: receive alarm details by using the interface circuit 32, where the alarm details are received after the first IP node detects that a service transmission path in the optical layer network is faulty, the service transmission path includes a path in which a service is transmitted in the IP layer network and the optical layer network, and the first IP node is an IP node that is in the service transmission path and that is connected to an optical node in the optical layer network; determine a fault type of the service transmission path in the optical layer network according to the alarm details; perform service optimization when the IP layer PCE determines that the path fault type is a real fault; and skip performing service optimization when the IP layer PCE determines that the path fault type is a pseudo fault.

In an implementation of this embodiment of the present invention, the processor 31 is further configured to: receive, by using the interface circuit 32, an alarm indication sent by the first IP node, where the alarm indication is used to indicate that the service transmission path in the optical layer network is faulty; and send a query message by using the interface circuit 32, where the query message is used to instruct to query the alarm details.

In another implementation of this embodiment of the present invention, the alarm details include optical layer switching frequency of the optical layer network, an optical layer switching type of the optical layer network, and an optical layer bit error rate of the optical layer network.

In another implementation of this embodiment of the present invention, the service transmission network further includes an application layer server, and the processor 31 is further configured to: report a determining result to the application layer server by using the interface circuit 32, so that the application layer server determines whether the determining result is correct; receive feedback information of the application layer server by using the interface circuit 32, where the feedback information is used to indicate whether the determining result is correct; record the feedback information of the application layer server; and determine the fault type of the service transmission path in the optical layer network according to the feedback information and the alarm details.

In this embodiment of the present invention, the device 30 receives the alarm details after the first IP node detects that the service transmission path in the optical layer network is faulty. Then the device 30 determines, according to the alarm details, whether the path fault type of the service transmission path in the optical layer network is a real fault or a pseudo fault. The device 30 executes a service optimization procedure when the fault type is a real fault. The device 30 does not execute the service optimization procedure when the fault type is a pseudo fault. In this way, the device 30 receives the alarm details after the first IP node detects that a service path in the optical layer network is faulty, and may determine, according to the alarm details, whether the path in the optical layer network is actually faulty. The device 30 executes the service optimization procedure only when determining that the path in the optical layer network is actually faulty. Therefore, the device 30 does not need to perform service optimization when a link in the optical layer network is not faulty, and particularly, a service is not frequently switched between currently available paths when a physical parameter of an optical layer is unstable. This resolves a problem that the currently available paths are occupied by the service, affecting transmission of another service and further affecting stability of a transmission network.

The service troubleshooting apparatus provided in the embodiments of the present invention may implement the foregoing method embodiment. For specific function implementation, refer to descriptions of the method embodiment. Details are not described herein again. The service troubleshooting method, apparatus, and device provided in the embodiments of the present invention may be applied to the service transmission network, but are not limited thereto.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service troubleshooting method, applied to a service transmission network, wherein the service transmission network comprises an Internet Protocol, IP, layer network and an optical layer network, the IP layer network comprises an IP layer path computation element, PCE, and a first IP node, and the method comprises:
receiving (101), by the IP layer PCE, alarm details comprising an optical layer switching frequency of the optical layer network, wherein the alarm details are used to indicate a type of a fault that occurs in a service transmission path in an optical layer network and are received after the first IP node detects that the service transmission path in the optical layer network is faulty, the service transmission path comprises a path in which a service is transmitted in the IP layer network and the optical layer network, and the first IP node is an IP node that is in the service transmission path and that is connected to an optical node in the optical layer network;
determining (102), by the IP layer PCE, a fault type of the service transmission path in the optical layer network according to the alarm details;
performing (103), by the IP layer PCE, service optimization when the IP layer PCE determines that the path fault type is a real fault; and
skipping performing (104), by the IP layer PCE, service optimization when the IP layer PCE determines that the path fault type is a pseudo fault,
wherein when the optical layer switching frequency is greater than a threshold, the fault type is determined as a pseudo fault, and when the optical layer switching frequency is less than the threshold, the fault type is determined as a real fault.

2. The method according to claim 1, wherein before the receiving (101), by the IP layer PCE, alarm details, the method further comprises:
receiving (105), by the IP layer PCE, an alarm indication sent by the first IP node, wherein the alarm indication is used to indicate that the service transmission path in the optical layer network is faulty; and
sending (106), by the IP layer PCE, a query message, wherein the query message is used to instruct to query the alarm details.

3. The method according to claim 2, wherein, when the optical layer network is a distributed network, the IP layer PCE sends the query message to an optical node of the service transmission path in the optical layer network; or, when the optical layer network is a centralized network, the IP layer PCE sends the query message to an optical layer PCE.

4. The method according to any one of claims 1 to 3, wherein the alarm details also comprise an optical layer switching type of the optical layer network, and an optical layer bit error rate of the optical layer network.

5. The method according to claim 1, wherein the service transmission network further comprises an application layer server, and after the determining (102), by the IP layer PCE, a fault type of the service transmission path in the optical layer network according to the alarm details, the method further comprises:
reporting (107), by the IP layer PCE, a determining result to the application layer server, so that the application layer server determines whether the determining result is correct; and
receiving and recording (108), by the IP layer PCE, feedback information of the application layer server, wherein the feedback information is used to indicate whether the determining result is correct; and
the determining (102), by the IP layer PCE, a fault type of the service transmission path in the optical layer network according to the alarm details comprises:
determining (1021), by the IP layer PCE, the fault type of the service transmission path in the optical layer network according to the feedback information and the alarm details.

6. A service troubleshooting apparatus (20), applied to a service transmission network, wherein the service transmission network comprises an Internet Protocol, IP, layer network and an optical layer network, the IP layer network comprises an IP layer path computation element, PCE, and a first IP node, the apparatus is the IP layer PCE, and the apparatus comprises:
a receiving unit (21), configured to receive alarm details comprising an optical layer switching frequency of the optical layer network, wherein the alarm details are used to indicate a type of a fault that occurs in a service transmission path in an optical layer network and are received after the first IP node detects that the service transmission path in the optical layer network is faulty, the service transmission path comprises a path in which a service is transmitted in the IP layer network and the optical layer network, and the first IP node is an IP node that is in the service transmission path and that is connected to an optical node in the optical layer network;
a determining unit (22), configured to determine a fault type of the service transmission path in the optical layer network according to the alarm details; and
a processing unit (23), configured to perform service optimization when the IP layer PCE determines that the path fault type is a real fault,
the processing unit (23) is further configured to skip performing service optimization when the IP layer PCE determines that the path fault type is a pseudo fault,
wherein when the optical layer switching frequency is greater than a threshold, the fault type is determined as a pseudo fault, and when the optical layer switching frequency is less than the threshold, the fault type is determined as a real fault.

7. The apparatus (20) according to claim 6, wherein the receiving unit (21) is further configured to receive an alarm indication sent by the first IP node, wherein the alarm indication is used to indicate that the service transmission path in the optical layer network is faulty; and
the apparatus (20) further comprises:
a sending unit (24), configured to send a query message, wherein the query message is used to instruct to query the alarm details.

8. The apparatus (20) according to claim 7, wherein, when the optical layer network is a distributed network, the sending unit (24) is specifically configured to send the query message to an optical node of the service transmission path in the optical layer network; or, when the optical layer network is a centralized network, the sending unit (24) is specifically configured to send the query message to an optical layer PCE.

9. The apparatus (20) according to any one of claims 6 to 8, wherein the alarm details also comprise an optical layer switching type of the optical layer network, and an optical layer bit error rate of the optical layer network.

10. The apparatus (20) according to claim 6, wherein the service transmission network further comprises an application layer server, and the apparatus (20) further comprises:
a reporting unit (25), configured to report a determining result to the application layer server, so that the application layer server determines whether the determining result is correct;
the receiving unit (21) is further configured to receive feedback information of the application layer server, wherein the feedback information is used to indicate whether the determining result is correct;
the processing unit (23) is further configured to record the feedback information of the application layer server; and
the determining unit (22) is further configured to determine the fault type of the service transmission path in the optical layer network according to the feedback information and the alarm details.

## Patentansprüche

1. Dienstfehlerbehebungsverfahren, das auf ein Dienstübertragungsnetz angewendet wird, wobei das Dienstübertragungsnetz ein Internetprotokoll-Schicht-Netz, IP-Schicht-Netz, und ein Netz einer optischen Schicht umfasst, das IP-Schicht-Netz ein IP-Schicht-Streckenberechnungselement, IP-Schicht-PCE, und einen ersten IP-Knoten umfasst und das Verfahren umfasst:
Empfangen (101), durch das IP-Schicht-PCE, von Alarmdetails, umfassend eine Schaltfrequenz einer optischen Schicht des Netzes einer optischen Schicht, wobei die Alarmdetails zum Angeben eines Typs eines Fehlers, der in einer Dienstübertragungsstrecke in einem Netz einer optischen Schicht auftritt, verwendet werden und empfangen werden, nachdem der erste IP-Knoten detektiert, dass die Dienstübertragungsstrecke im Netz einer optischen Schicht fehlerhaft ist, wobei die Dienstübertragungsstrecke eine Strecke umfasst, in der ein Dienst im IP-Schicht-Netz und dem Netz einer optischen Schicht übertragen wird, und der erste IP-Knoten ein IP-Knoten ist, der in der Dienstübertragungsstrecke ist und der mit einem optischen Knoten im Netz einer optischen Schicht verbunden ist;
Bestimmen (102), durch das IP-Schicht-PCE, eines Fehlertyps der Dienstübertragungsstrecke im Netz einer optischen Schicht gemäß den Alarmdetails:
Durchführen (103), durch das IP-Schicht-PCE, einer Dienstoptimierung, wenn das IP-Schicht-PCE bestimmt, dass der Streckenfehlertyp ein echter Fehler ist; und
Überspringen des Durchführens (104), durch das IP-Schicht-PCE, einer Dienstoptimierung, wenn das IP-Schicht-PCE bestimmt, dass der Streckenfehlertyp ein Pseudofehler ist,
wobei, wenn die Schaltfrequenz einer optischen Schicht größer als eine Schwelle ist, der Fehlertyp als ein Pseudofehler bestimmt wird, und wenn die Schaltfrequenz einer optischen Schicht kleiner als die Schwelle ist, der Fehlertyp als ein echter Fehler bestimmt wird.

2. Verfahren nach Anspruch 1, wobei, vor dem Empfangen (101), durch das IP-Schicht-PCE, von Alarmdetails das Verfahren ferner umfasst:
Empfangen (105), durch das IP-Schicht-PCE, einer durch den ersten IP-Knoten gesendeten Alarmangabe, wobei die Alarmangabe zum Angeben, dass die Dienstübertragungsstrecke im Netz einer optischen Schicht fehlerhaft ist, verwendet wird; und
Senden (106), durch das IP-Schicht-PCE, einer Abfragenachricht, wobei die Abfragenachricht zum Anweisen zum Abfragen der Alarmdetails verwendet wird.

3. Verfahren nach Anspruch 2, wobei, wenn das Netz einer optischen Schicht ein verteiltes Netz ist, das IP-Schicht-PCE die Abfragenachricht an einen optischen Knoten der Dienstübertragungsstrecke im Netz einer optischen Schicht sendet oder, wenn das Netz einer optischen Schicht ein zentralisiertes Netz ist, das IP-Schicht-PCE die Abfragenachricht an ein PCE einer optischen Schicht sendet.

4. Verfahren nach einem der Ansprüche 1 bis 3, wobei die Alarmdetails außerdem einen Schalttyp einer optischen Schicht des Netzes einer optischen Schicht und eine Bitfehlerrate einer optischen Schicht des Netzes einer optischen Schicht umfassen.

5. Verfahren nach Anspruch 1, wobei das Dienstübertragungsnetz ferner einen Anwendungsschichtserver umfasst und wobei, nach dem Bestimmen (102), durch das IP-Schicht-PCE, eines Fehlertyps der Dienstübertragungsstrecke im Netz einer optischen Schicht gemäß den Alarmdetails, das Verfahren ferner umfasst:
Berichten (107), durch das IP-Schicht-PCE, eines Bestimmungsergebnisses an den Anwendungsschichtserver, sodass der Anwendungsschichtserver bestimmt, ob das Bestimmungsergebnis richtig ist; und
Empfangen und Erfassen (108), durch das IP-Schicht-PCE, von Rückkopplungsinformationen des Anwendungsschichtservers, wobei die Rückkopplungsinformationen zum Angeben, ob das Bestimmungsergebnis richtig ist, verwendet werden; und
wobei das Bestimmen (102), durch das IP-Schicht-PCE, eines Fehlertyps der Dienstübertragungsstrecke im Netz einer optischen Schicht gemäß den Alarmdetails umfasst:
Bestimmen (1021), durch das IP-Schicht-PCE, des Fehlertyps der Dienstübertragungsstrecke im Netz einer optischen Schicht gemäß den Rückkopplungsinformationen und den Alarmdetails.

6. Dienstfehlerbehebungsvorrichtung (20), die auf ein Dienstübertragungsnetz angewendet wird, wobei das Dienstübertragungsnetz ein Internetprotokoll-Schicht-Netz, IP-Schicht-Netz, und ein Netz einer optischen Schicht umfasst, das IP-Schicht-Netz ein IP-Schicht-Streckenberechnungselement, IP-Schicht-PCE, und einen ersten IP-Knoten umfasst, die Vorrichtung das IP-Schicht-PCE ist und die Vorrichtung umfasst:
eine Empfangseinheit (21), die zum Empfangen von Alarmdetails, umfassend eine Schaltfrequenz einer optischen Schicht des Netzes einer optischen Schicht ausgelegt ist, wobei die Alarmdetails zum Angeben eines Typs eines Fehlers, der in einer Dienstübertragungsstrecke in einem Netz einer optischen Schicht auftritt, verwendet werden und empfangen werden, nachdem der erste IP-Knoten detektiert, dass die Dienstübertragungsstrecke im Netz einer optischen Schicht fehlerhaft ist, wobei die Dienstübertragungsstrecke eine Strecke umfasst, in der ein Dienst im IP-Schicht-Netz und dem Netz einer optischen Schicht übertragen wird, und der erste IP-Knoten ein IP-Knoten ist, der in der Dienstübertragungsstrecke ist und der mit einem optischen Knoten im Netz einer optischen Schicht verbunden ist;
eine Bestimmungseinheit (22), die zum Bestimmen eines Fehlertyps der Dienstübertragungsstrecke im Netz einer optischen Schicht gemäß den Alarmdetails ausgelegt ist; und
eine Verarbeitungseinheit (23), die zum Durchführen einer Dienstoptimierung, wenn das IP-Schicht-PCE bestimmt, dass der Streckenfehlertyp ein echter Fehler ist, ausgelegt ist, wobei die Verarbeitungseinheit (23) ferner zum Überspringen des Durchführens einer Dienstoptimierung, wenn das IP-Schicht-PCE bestimmt, dass der Streckenfehlertyp ein Pseudofehler ist, ausgelegt ist,
wobei, wenn die Schaltfrequenz einer optischen Schicht größer als eine Schwelle ist, der Fehlertyp als ein Pseudofehler bestimmt wird, und wenn die Schaltfrequenz einer optischen Schicht kleiner als die Schwelle ist, der Fehlertyp als ein echter Fehler bestimmt wird.

7. Vorrichtung (20) nach Anspruch 6, wobei die Empfangseinheit (21) ferner zum Empfangen einer durch den ersten IP-Knoten gesendeten Alarmangabe ausgelegt ist, wobei die Alarmangabe zum Angeben, dass die Dienstübertragungsstrecke im Netz einer optischen Schicht fehlerhaft ist, verwendet wird; und
die Vorrichtung (20) ferner umfasst:
eine Sendeeinheit (24), die zum Senden einer Abfragenachricht ausgelegt ist, wobei die Abfragenachricht zum Anweisen zum Abfragen der Alarmdetails verwendet wird.

8. Vorrichtung (20) nach Anspruch 7, wobei, wenn das Netz einer optischen Schicht ein verteiltes Netz ist, die Sendeeinheit (24) insbesondere zum Senden der Abfragenachricht an einen optischen Knoten der Dienstübertragungsstrecke im Netz einer optischen Schicht ausgelegt ist oder, wenn das Netz einer optischen Schicht ein zentralisiertes Netz ist, die Sendeeinheit (24) insbesondere zum Senden der Abfragenachricht an ein PCE einer optischen Schicht ausgelegt ist.

9. Vorrichtung (20) nach einem der Ansprüche 6 bis 8, wobei die Alarmdetails außerdem einen Schalttyp einer optischen Schicht des Netzes einer optischen Schicht und eine Bitfehlerrate einer optischen Schicht des Netzes einer optischen Schicht umfassen.

10. Vorrichtung (20) nach Anspruch 6, wobei das Dienstübertragungsnetz ferner einen Anwendungsschichtserver umfasst und die Vorrichtung (20) ferner umfasst:
eine Berichtseinheit (25), die zum Berichten eines Bestimmungsergebnisses an den Anwendungsschichtserver ausgelegt ist, sodass der Anwendungsschichtserver bestimmt, ob das Bestimmungsergebnis richtig ist;
wobei die Empfangseinheit (21) ferner zum Empfangen von Rückkopplungsinformationen des Anwendungsschichtservers ausgelegt ist, wobei die Rückkopplungsinformationen zum Angeben, ob das Bestimmungsergebnis richtig ist, verwendet werden;
wobei die Verarbeitungseinheit (23) ferner zum Erfassen der Rückkopplungsinformationen des Anwendungsschichtservers ausgelegt ist und
wobei die Bestimmungseinheit (22) ferner zum Bestimmen des Fehlertyps der Dienstübertragungsstrecke im Netz einer optischen Schicht gemäß den Rückkopplungsinformationen und den Alarmdetails ausgelegt ist.

## Revendications

1. Procédé de dépannage de service, appliqué à un réseau de transmission de service, le réseau de transmission de service comprenant un réseau de couche de protocole internet, IP, et un réseau de couche optique, le réseau de couche IP comprenant un élément de calcul de chemin, PCE, de couche IP, et un premier nœud IP, et le procédé comprenant :
la réception (101), par le PCE de couche IP, de détails d'alarme comprenant une fréquence de commutation de couche optique du réseau de couche optique, les détails d'alarme étant utilisés pour indiquer un type d'une défaillance qui survient dans un chemin de transmission de service dans un réseau de couche optique et étant reçus après que le premier nœud IP a détecté que le chemin de transmission de service dans le réseau de couche optique est défaillant, le chemin de transmission de service comprenant un chemin dans lequel un service est transmis dans le réseau de couche IP et le réseau de couche optique, et le premier nœud IP étant un nœud IP qui se trouve dans le chemin de transmission de service et qui est connecté à un nœud optique dans le réseau de couche optique ;
la détermination (102), par le PCE de couche IP, d'un type de défaillance du chemin de transmission de service dans le réseau de couche optique en fonction des détails d'alarme ;
la réalisation (103), par le PCE de couche IP, d'une optimisation de service quand le PCE de couche IP détermine que le type de défaillance de chemin est une défaillance réelle ; et l'omission de la réalisation (104), par le PCE de couche IP, d'une optimisation de service quand le PCE de couche IP détermine que le type de défaillance de chemin est une pseudodéfaillance,
dans lequel, quand la fréquence de commutation de couche optique est supérieure à un seuil, le type de défaillance est déterminé en tant que pseudodéfaillance, et quand la fréquence de commutation de couche optique est inférieure au seuil, le type de défaillance est déterminé en tant que défaillance réelle.

2. Procédé selon la revendication 1, avant la réception (101), par le PCE de couche IP, de détails d'alarme, le procédé comprenant en outre :
la réception (105), par le PCE de couche IP, d'une indication d'alarme envoyée par le premier nœud IP, l'indication d'alarme étant utilisée pour indiquer que le chemin de transmission de service dans le réseau de couche optique est défaillant ; et
l'envoi (106), par le PCE de couche IP, d'un message de requête, le message de requête étant utilisé pour donner l'instruction de demander les détails d'alarme.

3. Procédé selon la revendication 2, dans lequel, quand le réseau de couche optique est un réseau distribué, le PCE de couche IP envoie le message de requête à un nœud optique du chemin de transmission de service dans le réseau de couche optique ; ou, quand le réseau de couche optique est un réseau centralisé, le PCE de couche IP envoie le message de requête à un PCE de couche optique.

4. Procédé selon l'une quelconque des revendications 1 à 3, dans lequel les détails d'alarme comprennent également un type de commutation de couche optique du réseau de couche optique, et un taux d'erreur binaire de couche optique du réseau de couche optique.

5. Procédé selon la revendication 1, le réseau de transmission de service comprenant en outre un serveur de couche d'application, et après la détermination (102), par le PCE de couche IP, d'un type de défaillance du chemin de transmission de service dans le réseau de couche optique en fonction des détails d'alarme, le procédé comprenant en outre :
l'envoi d'un rapport (107), par le PCE de couche IP, d'un résultat de détermination à un serveur de couche d'application, de sorte que le serveur de couche d'application détermine si le résultat de détermination est correct ou non ; et
la réception et l'enregistrement (108), par le PCE de couche IP, d'informations de rétroaction du serveur de couche d'application, les informations de rétroaction étant utilisées pour indiquer si le résultat de détermination est correct ou non ; et
la détermination (102), par le PCE de couche IP, d'un type de défaillance du chemin de transmission de service dans le réseau de couche optique en fonction des détails d'alarme comprend :
la détermination (1021), par le PCE de couche IP, du type de défaillance du chemin de transmission de service dans le réseau de couche optique en fonction des informations de rétroaction et des détails d'alarme.

6. Appareil de dépannage de service (20), appliqué à un réseau de transmission de service, le réseau de transmission de service comprenant un réseau de couche de protocole internet, IP, et un réseau de couche optique, le réseau de couche IP comprenant un élément de calcul de chemin, PCE, de couche IP et un premier nœud IP, l'appareil étant le PCE de couche IP, et l'appareil comprenant :
une unité de réception (21), configurée pour recevoir des détails d'alarme comprenant une fréquence de commutation de couche optique du réseau de couche optique, les détails d'alarme étant utilisés pour indiquer un type d'une défaillance qui survient dans un chemin de transmission de service dans un réseau de couche optique et étant reçus après que le premier nœud IP a détecté que le chemin de transmission de service dans le réseau de couche optique est défaillant, le chemin de transmission de service comprenant un chemin dans lequel un service est transmis dans le réseau de couche IP et le réseau de couche optique, et le premier nœud IP étant un nœud IP qui se trouve dans le chemin de transmission de service et qui est connecté à un nœud optique dans le réseau de couche optique ;
une unité de détermination (22), configurée pour déterminer un type de défaillance du chemin de transmission de service dans le réseau de couche optique en fonction des détails d'alarme ; et
une unité de traitement (23), configurée pour réaliser une optimisation de service quand le PCE de couche IP détermine que le type de défaillance de chemin est une défaillance réelle, l'unité de traitement (23) est en outre configurée pour omettre la réalisation d'une optimisation de service quand le PCE de couche IP détermine que le type de défaillance de chemin est une pseudodéfaillance,
dans lequel, quand la fréquence de commutation de couche optique est supérieure à un seuil, le type de défaillance est déterminé en tant que pseudodéfaillance, et quand la fréquence de commutation de couche optique est inférieure au seuil, le type de défaillance est déterminé en tant que défaillance réelle.

7. Appareil (20) selon la revendication 6, l'unité de réception (21) étant en outre configurée pour recevoir une indication d'alarme envoyée par le premier nœud IP, l'indication d'alarme étant utilisée pour indiquer que le chemin de transmission de service dans le réseau de couche optique est défaillant ; et
l'appareil (20) comprenant en outre :
une unité d'envoi (24), configurée pour envoyer un message de requête, le message de requête étant utilisé pour donner l'instruction de demander les détails d'alarme.

8. Appareil (20) selon la revendication 7, dans lequel, quand le réseau de couche optique est un réseau distribué, l'unité d'envoi (24) est spécifiquement configurée pour envoyer le message de requête à un nœud optique du chemin de transmission de service dans le réseau de couche optique ; ou, quand le réseau de couche optique est un réseau centralisé, l'unité d'envoi (24) est spécifiquement configurée pour envoyer le message de requête à un PCE de couche optique.

9. Appareil (20) selon l'une quelconque des revendications 6 à 8, dans lequel les détails d'alarme comprennent également un type de commutation de couche optique du réseau de couche optique, et un taux d'erreur binaire de couche optique du réseau de couche optique.

10. Appareil (20) selon la revendication 6, le réseau de transmission de service comprenant en outre un serveur de couche d'application, et l'appareil (20) comprenant en outre :
une unité de rapport (25), configurée pour rapporter un résultat de détermination au serveur de couche d'application, de sorte que le serveur de couche d'application détermine si le résultat de détermination est correct ou non ;
l'unité de réception (21) est en outre configurée pour recevoir des informations de rétroaction du serveur de couche d'application, les informations de rétroaction étant utilisées pour indiquer si le résultat de détermination est correct ou non ;
l'unité de traitement (23) est en outre configurée pour enregistrer les informations de rétroaction du serveur de couche d'application ; et
l'unité de détermination (22) est en outre configurée pour déterminer le type de défaillance du chemin de transmission de service dans le réseau de couche optique en fonction des informations de rétroaction et des détails d'alarme.
